# EUROPEAN PATENT SPECIFICATION

(11) **EP 3 082 060 B1**
(45) Date of publication and mention of the grant of the patent: **13.06.2018**
(21) Application number: 15190534.6
(22) Date of filing: 20.10.2015
(51) Int. Cl.: H04W 4/00, H04L 12/933, H04B 5/00, G06K 7/10

(54) **METHOD FOR MANAGING INFORMATION COMMUNICATION BETWEEN A NFC CONTROLLER AND A SECURE ELEMENT WITHIN AN APPARATUS, AND CORRESPONDING APPARATUS AND NFC CONTROLLER**
VERFAHREN ZUR VERWALTUNG VON INFORMATIONSKOMMUNIKATION ZWISCHEN EINEM NFC-CONTROLLER UND EINEM SICHEREN ELEMENT IN EINER VORRICHTUNG UND ENTSPRECHENDE VORRICHTUNG UND NFC-STEUERUNG
PROCÉDÉ DE GESTION DE LA COMMUNICATION D'INFORMATIONS ENTRE UN CONTRÔLEUR NFC ET UN ÉLÉMENT SÉCURISÉ AU SEIN D'UN APPAREIL, ET APPAREIL ET CONTRÔLEUR NFC CORRESPONDANTS

(30) Priority: 14.04.2015 FR 1553229
(43) Date of publication of application: 19.10.2016
(73) Proprietor: STMicroelectronics (Rousset) SAS, 13790 Rousset (FR)
(72) Inventor: CHARLES, Alexandre, 13390 AURIOL (FR)
(74) Representative: Casalonga

(56) References cited:
- EP-A1- 2 447 872
- EP-A1- 2 590 107
- US-A1- 2014 022 060

## Description

Embodiments of the invention relate to the communication between components or elements, in particular between a contactless element, for example a NFC ("Near Field Communication") controller element, at least one element, such as a UICC or secure element and a device host, for example located within a wireless apparatus, for example a mobile phone.

Further to its conventional telephone function, a mobile phone may be used for exchanging information with a contactless device by using a contactless communication protocol.

This permits to exchange information between the contactless device and elements located within the mobile phone. Plenty of applications are thus possible such as mobile ticketing in public transport (the mobile phone acts as a ticket) or mobile payment (the mobile phone acts as a debit/credit payment card).

Near Field Communication or NFC is a short range high frequency wireless communication technology which enables such exchange of data between two contactless devices over a short distance, for example 10 centimetres.

NFC is an open platform technology standardized in ISO/IEC 18092 and ISO/IEC 21481 but incorporates a variety of pre-existing standards including ISO/IEC 14443 protocol type A and type B.

NFC device solutions generally comprise a device host, a NFC controller and one or several secure elements.

The standard way to communicate between the device host and the secure element is to use the same link, for example a SWP link, as the one used for contactless communication. An example of such a standard way of communication is disclosed in US 2014/0022060 A1

However, such a link is limited in term of bandwidth.

And, for some use cases, a bigger bandwidth is required to allow communication between the device host and the secure element, for example in case of transfer of data related to a finger print for identification of the user.

According to an embodiment, a method and apparatus are proposed to allow communication between a device host and at least one secure element which requires a bigger bandwidth than the one supported by the link, for example the SWP link, used for exchanging information related to the contactless (wireless) communication.

Several aspects and embodiments of the invention are defined in the appended claims.

According to an aspect, a method is proposed for managing information communication between a NFC controller, an antenna, a device host and at least one secure element, said NFC controller being coupled: i) to said antenna for contactless communication with an object, ii) to said device host and iii) to said at least one secure element.

According to this aspect, said method comprises routing all said information through said NFC controller, communicating first information to be communicated between said at least one secure element and said device host through a first communication link between said NFC controller and said device host and through a second communication link between said NFC controller and said at least one secure element, communicating second information coming from and/or intended for said antenna through a third communication link between said NFC controller and said at least one secure element, said first and second communication links having bandwidths greater than the bandwidth of said third communication link.

Thus, according to this aspect, another link is provided between the NFC controller and the secure element, which is different from the link used for the RF (contactless) communication and which has a bandwidth greater than the bandwidth of the link used for the RF communication.

This additional link will be used for exchanging information between the device host and the secure element with a high bit rate. Further, the proposed NFC solution is here a NFC controller-centric solution, i.e. a solution wherein all the information communicated between all the elements of the NFC solution pass through the NFC controller and all the routing operations of the different kinds of information are performed within the NFC controller.

According to an embodiment, the third communication link is a SWP link.

A SWP link is a link or line adapted to support the Single Wire Protocol (SWP).

Said second communication link may be a bus of the SPI or I²C or UART or USB type.

According to an embodiment, said first communication link is a bus of the SPI or I²C or UART type and said first information are exchanged on said first communication link by using a NCI (abbreviated term for: NFC Controller Interface) type communication protocol.

Said first information may comprise information exchanged by using APDU NFCEE protocol of said NCI type communication protocol.

APDU is a conventional abbreviated term for "Application Protocol Data Unit".

As another possibility, said first information may comprise information exchanged by using transparent NFCEE protocol of said NCI type communication protocol.

By using such a transparent NFCEE protocol, it is thus possible to exchange either APDU, such as those compliant with the APDU NFCEE protocol, or proprietary messages compliant with a proprietary communication protocol.

According to an embodiment, the method further comprises communicating on said first and third communication links third information to be communicated between said at least one secure element and said device host.

Said third information may comprise information communicated by using HCI access protocol of said NCI type communication protocol.

According to another aspect, an apparatus is proposed comprising an antenna for a contactless communication with an object, a device host, at least one secure element and a NFC controller.

The NFC controller includes :
i) first input/output means coupled to said device host through a first communication link configured to carry first information intended to be communicated between said at least one secure element and said device host,
ii) second input/output means coupled to said at least one secure element through a second communication link configured to carry said first information,
iii) third input/output means coupled to said at least one secure element through a third communication link configured to carry second information coming from and/or intended for said antenna, and
iv) fourth input/output means coupled to said antenna, wherein said first and second communication links have bandwidths greater than the bandwidth of said third communication link, and said NFC controller further includes routing means configured to route said first information between said first and second input/output means and to route said second information between said third and fourth input/output means.

According to an embodiment, the third communication link is a SWP link and third input/output means comprises an interface of the HCI type.

According to an embodiment, said second communication link is a bus of the SPI or I²C or UART or USB type and said second input/output means comprises a bus interface adapted to the type of said bus.

According to an embodiment, said first communication link is a bus of the SPI or I²C or UART type configured to support a NCI type communication protocol and said first input/output means comprises a bus interface adapted to the type of said bus.

According to an embodiment, said first and third communication links are further configured to carry third information intended to be communicated between said at least one secure element and said device host and said routing means are further configured to route said third information between said first and third input/output means.

The secure element may be an UICC or an embedded secure element.

According to another aspect, a NFC controller is proposed comprising
first input/output means configured to be coupled to a device host for receiving and/or transmitting first information intended to be communicated between at least one secure element and said device host,
second input/output means configured to be coupled to said at least one secure element for receiving and/or transmitting said first information,
third input/output means configured to be coupled to said at least one secure element for receiving and/or transmitting second information coming from and/or intended for an antenna adapted for a contactless communication with an object,
fourth input/output means configured to be coupled to said antenna, wherein said first and second input/output means have bandwidths greater than the bandwidth of said third input/output means, and said NFC controller further includes routing means configured to route said first information between said first and second input/output means and to route said second information between said third and fourth input/output means.

According to an embodiment, said third input/output means comprises an interface of the HCI type.

According to an embodiment, said first input/output means comprises a bus interface of the SPI or I²G or UART type configured to support a NCI type communication protocol.

According to an embodiment, said first and third input/output means are further configured to receive and/or transmit third information intended to be communicated between said at least one secure element and said device host and said routing means are further configured to route said third information between said first and third input/output means.

Other advantages and features of the invention will appear on examining the detailed description of embodiments, these being in no way limiting, and of the appended drawings in which:

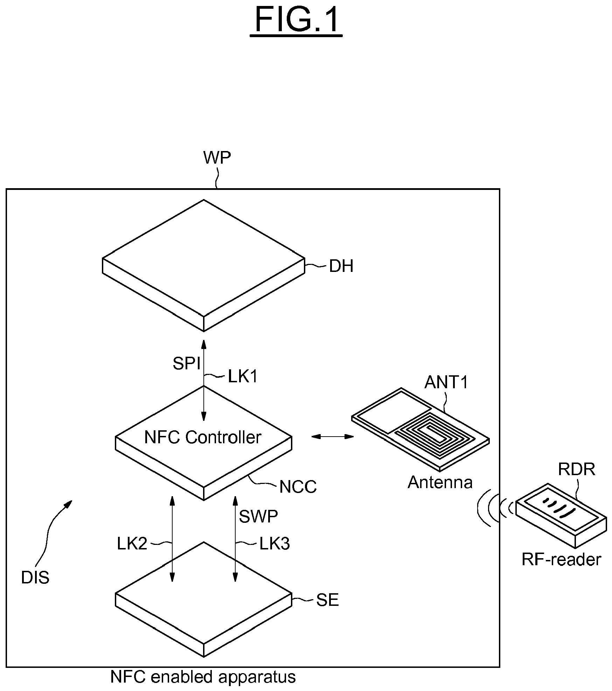

- figures 1-6 relate to particular embodiments of the invention.

Figure 1 illustrates a NFC enabled apparatus WP, e.g. a NFC mobile phone.

The apparatus WP comprises a device DIS including a contactless front end element NCC, for example a NFC controller, which is responsible for wireless (contactless) communication, for example radiofrequency (RF communication), with an external RF reader RDR or an external tag or another peer NFC device through an antenna ANT1. The contactless communication protocol is for example the one disclosed in ISO/IEC 14443-4.

The device comprises also a secure element SE connected to the NFC controller NCC.

A secure element is for example an element adapted to contain secure or protected information, for example banking information, information related to telephone subscription....

The secure element SE may be an embedded secure element, for example totally embedded in an integrated circuit containing the NFC controller, and for example packed with said NFC controller. In other words, said secure element SE may be permanently incorporated in the mobile phone, i.e. without being able to be removed.

As a variant, the secure element SE may be a removable secure element, for example a UICC providing the network subscription (SIM and USIM application) and some RF applications using the ISO/IEC 14443-4 protocol layer in card emulation mode.

As defined within ETSI TR 102 216 V3.0.0 (2003-09), UICC which is neither an abbreviation nor an acronym, designates a smart card that conforms to the specifications written and maintained by the ETSI Smart Card Platform project.

The mobile phone WP comprises also a device host DH responsible for managing the NFC controller as well for user input and network communication.

As illustrated in Figure 1, the NFC controller NCC is coupled to the device host DH by a first communication link LK1, for example a bus of the SPI type.

The NFC controller NCC is coupled to the secure element SE by a second communication link LK2, for example a bus of the SPI type and with a third communication link LK3, for example a SWP link.

Although a SWP link is described here, other types of link LK3 may be used, in particular links able to carry proprietary protocols such as DCLB (Digital Contactless Bridge) or the NFC-WI (Wire Interface) interface. The bandwidths of all this types of links or interfaces are defined up to few megabits per second. (e.g.:SWP up to 1,7Mbps, DCLB up to 848 kbps, WI up to 848 kbps).

The first and second communication links LK1 and LK2 are chosen to have a bandwidth greater than the bandwidth of the third communication link LK3.

Buses of the SPI, or I²C, or UART, or USB type are examples of such a link. And, the bandwidth of such a link may be up to 26Mbps.

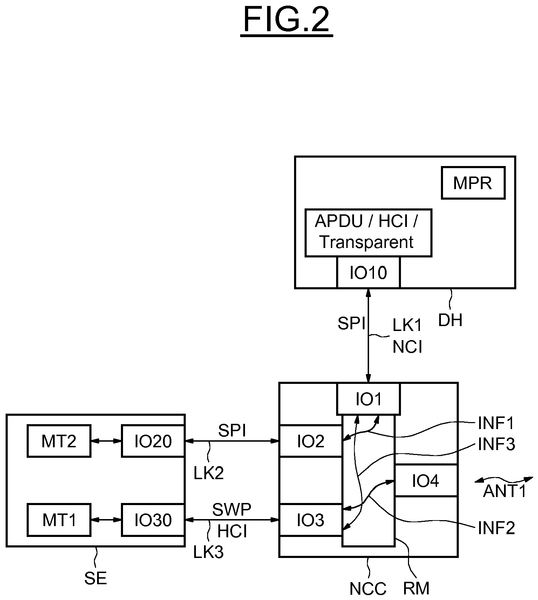

The coupling between the device host DH, the NFC controller NCC and the secure element will be now described more in details with reference to figure 2 in particular.

The NFC controller NCC comprises
- first input/output means 101 coupled to the device of DH through the first communication link LK1,
- second input/output means IO2 coupled to said secure element SE through the second communication means LK2,
- third input/output means IO3 coupled to the secure element SE through the third communication link LK3 and
- fourth input/output means IO4 coupled to the antenna ANT1.

It should be noted here that the bandwidth of a link is also the bandwidth of the input/output means coupled to that link.

As indicated above, the third communication link LK3 is a SWP link.

A SWP link is a link or line adapted to support the single wire protocol (SWP).

The Single Wire Protocol (SWP) is a bit oriented, point-to-point communication protocol between a secure element and a contactless front end, and is specified in the standard ETSI TS 102 613, for example the version V7.7.0 (2009-10) thereof. The man skilled in the art could refer if necessary to this document.

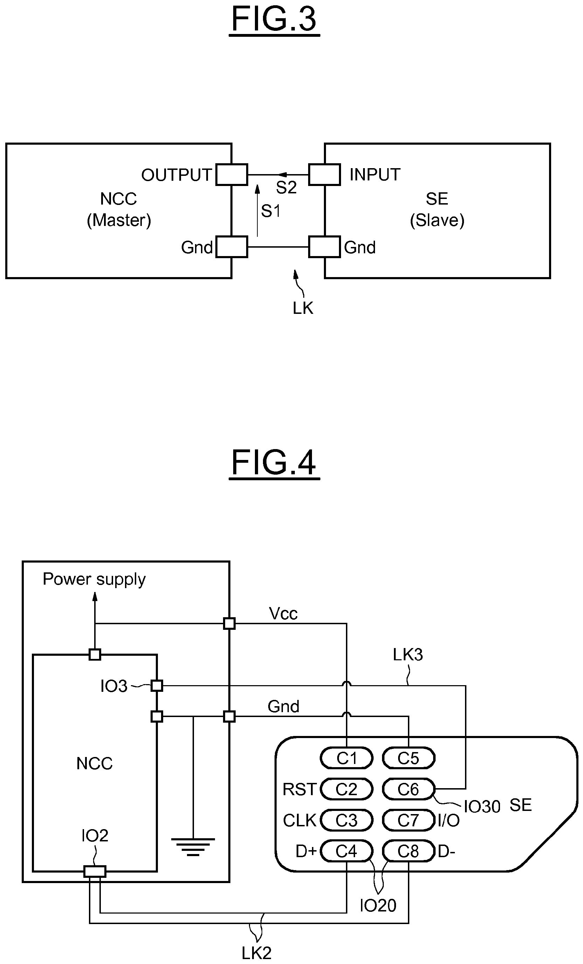

More precisely, as illustrated in figure 3, the NFC controller NCC is the master whereas the secure element SE is a slave. The master and a slave are mutually connected through the SWP link LK.

As disclosed in ETSI TS 102 613, the principle of the single wire protocol (SWP) is based on the transmission of digital information in full duplex mode. The signal S1 from NCC to SE is transmitted by a digital modulation (L or H) in the voltage domain whereas the signal S2 from SE to NCC is transmitted by a digital modulation (L or H) in the current domain.

When the master sends S1 as state H then the slave may either draw a current (state H) or not (state L) and thus transmits S2. With pulse width modulation bit coding of S1, it is possible to transmit a transmission clock, as well as data in full duplex mode. More details can be found in ETSI TS 102 613.

The SWP link uses HCI (Host Controller Interface) as disclosed within ETSI TS 102 613 and ETSI TS 102 622. In other words, the input/output means IO3 of the NFC controller and the corresponding input/output means IO30 of the secure element comprise interfaces of the HCI type.

As indicated in ETSI TS 102 622, for example version 11.00 (2011-09), the HCI defines the interface between the NFC controller and the secure element. More specifically, the HCI has three levels:
- a collection of gates that exchange commands, responses and events,
- an HCP (Host Controller Protocol) messaging mechanism, and
- an HCP routine mechanism that may optionally segment messages when required.

The HCP requires in particular that the underlying data link layer (e.g. SWP) shall be error-free and the order of the received/sent data shall be respected.

As explained in ETSI TS 102 613, LLC (Logical Link Control) layer is in charge of error management and flow control while MAC (Medium Access Control) layer is in charge of framing on the SWP link LK1. Among the three LC layers defined in ETSI TS 102 613, one can cite the LLC layer called SHDLC (Simplified High Level Data Link Control) LLC and the CLT (Contactless Tunnelling) LLC.

In fact, the SWP link LK3 uses one logical channel (or pipe) for respectively carrying data coming from and intended to the RF communication with the reader or the tag.

Turning now to the device host DH, it includes generally a processor MPR which is responsible for managing the NFC controller as well as for managing a user input. The device host DH further comprises input/output means IO10 coupled to the first communication link LK1.

The input/output means IO1 of the NFC controller NCC and the input/output means IO10 of the device host comprise for example interfaces of the NCI (NFC Controller Interface) type. The communication protocol called NCI, between an NFC controller and a device host is for example described in the document entitled "NFC Forum-TS-NCI-1.0_candidate_1, April 12, 2012". The man skilled in the art may refer to this document if necessary.

And, the link LK1 may be, for example, a bus of the I²C, UART, or SPI type.

The communication link LK2 is here a bus of the SPI type. However, such a bus may be also a bus of the I²C or UART or USB type.

Accordingly, the second input/output means IO2 and the corresponding input/output means IO20 of the secure element SE comprise a bus interface corresponding to the type of the bus LK2, here a bus interface of the SPI type.

The fourth input/output means IO4 of the NFC controller NCC is coupled to the antenna ANT1 and is compliant with NFC protocols used for RF communication with the RF reader, the tag or another peer NFC device.

The secure element SE comprises also first processing means MT1 coupled to the input/output means IO30 for processing information related to the RF communication with the antenna ANT1, and second processing means MT2 coupled to the input/output means IO20 for processing information exchanged on the second communication link LK2.

Although the secure element SE is here an embedded secure element, it may be also a UICC.

The UICC is also connected to the NFC controller by a SWP link using HCI (Host Controller Interface) as disclosed within ETSI TS 102 613 and ETSI TS 102 622.

Figure 4 represents an embodiment of the physical link between the NFC controller NCC and a UICC. More precisely, as illustrated in this figure and explained in ETSI TS 102 613, the contact C6 (IO30) of the UICC is connected to the port SWIO (IO3) of the NFC controller NCC for transmission of signal S1 and S2.

Further, in such a case, the second communication link LK2 is an USB bus connected between the second input/output means IO2 of the NFC controller NCC and the contacts C4 and C8 of the UICC form input/output means IO20.

As it can be seen more particularly in figure 2, all the information exchanged between the device host DH, the secure element SE and the antenna ANT1 pass through the NFC controller NFC and are routed between the corresponding input/output means by routing means RM which can be implemented by software module(s).

More precisely, first information communicated between the secure element and the device host are communicated through the first communication link LK1 and through the second communication link LK2.

Second information INF2 coming from and/or intended to said antenna ANT1 are communicated through the third communication link LK3.

More precisely, the routing means RM extract the second information INF2 from the frames received at the first input/output means IO4 according to a NFC protocol and populates those second information INF2 according to the specification of the HCI interface IO3 in order for them to be transmitted on the SWP link LK3.

Reverse processing are performed for the second information received at the HCI interface IO3 and intended to be transmitted through the fourth input/output means IO4.

The first information intended to be exchanged between the device host DH and the secure element SE are for example data related to a fingerprint, which can be encrypted or not, and which can be compared with for example a fingerprint reference store in the secure element in order to send back to the device host a result of this matching check.

The first information INF1 are exchanged on the first communication link LK1 by using for example a NCI type communication protocol.

Several protocols may be used.

For example, the first information may be exchanged by using the so-called APDU NFCEE protocol of the NCI type communication protocol.

The man skilled in the art may refer to the above mentioned NCI document for having more details about the APDU NFCEE protocol or interface.

Briefly speaking, the communication used in this protocol uses the sending and receiving of APDU command response pairs. Each command APDU contains a data packet header followed by a payload containing the data field.

When the routing means RM receives such an APDU, it extracts the information contained therein and encapsulates it according to the transport format required by the link LK2, for example the SPI bus.

Instead of using the APDU NFCEE protocol or interface, the first information may be exchanged on the first communication link LK1 by using the transparent NFCEE protocol of said NCI communication protocol.

Such transparent protocol or interface is used by the device host to communicate with the secure element connected to the NFC controller by exchanging data which is not understood by the NFC controller but just passed without modification.

When the routine means RM of the NFC controller receive such messages, the routine means extract and forward the payload of the data messages in the appropriate message format directly to the input/output means IO2 without any modification.

In the reverse direction, when a message from the secure element is received at the second input/output means, the routing means extract the data from the message, populate it to the payload of a data message and send the data message to the device host on the first communication link LK1.

For the communication between the secure element SE and the device host DH, third information INF3 may be exchanged by using the third communication link LK3 (SWP) and the first communication link LK1. This third information INF3 are for example connectivity events with are events defined by host controller interface (HCI) at the end of an RF transaction. The secure element may for example send to the device host an indication stating that a RF transaction is actually ended.

This third information may thus comprise information communicated by using HCI access protocol. And, when the routing means RM of the NFC controller NCC receive such third information using HCI access protocol on the first communication link LK1, it extracts the information contained thereof, encapsulates it according to the HCI protocol supported by the SWP link LK3 and route this message on the link LK3 through the third input/output means IO3.

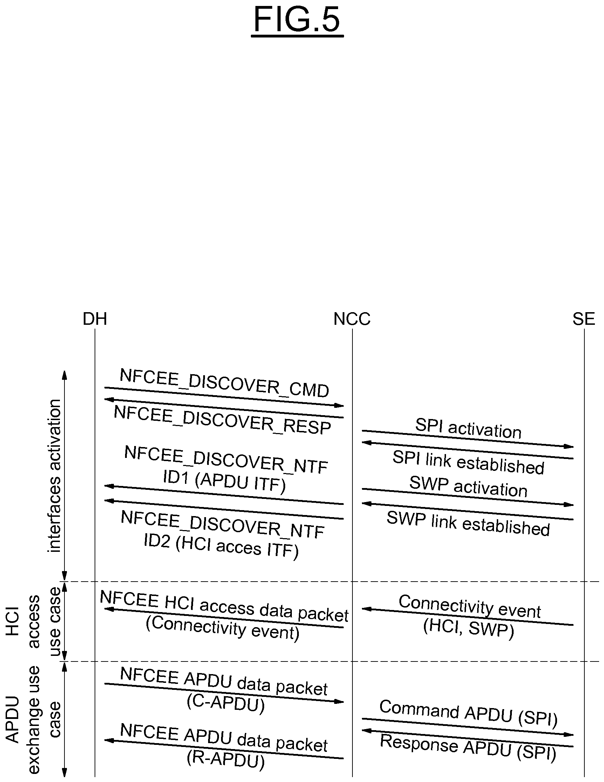

We refer no more precisely to figure 5 to illustrate an example of an interface activation procedure and routing management.

In order to activate the interfaces, a specific procedure called NFCEE discovery procedure in the above mentioned NCI document may be used.

According to this procedure, the device host DH sends first a command called NFCEE_DISCOVER_CMD to the NFC controller NCC. In response to this command, the NFC controller sends a response command called NFCEE_DISCOVER_RESP. Then, the NFC controller triggers the conventional activation of the SPI bus and when all is in order for the secure element, the secure element sends a response indicating that the SPI link is established.

The NFC controller triggers also the activation of the SWP link and when the activation is ended according to the SWP specification, a response indicating that the SWP link is established, is sent to the NFC controller.

Then, the NFC controller sends to the device host two responses called NFCEE_DISCOVER_NTF. Each of those commands contains in the payload field an identification indication Id of the specific protocol or interface supported by the second communication link LK2 and the third communication link LK3. And, although there is only one secure element connected to the NFC controller by two separate links LK2 and LK3, this configuration is seen by the discovery procedure as two separate secure elements supporting respectively two different interfaces.

After the interfaces have been activated, the exchange of the third information INF3 is performed according to the NFCEE HCI access protocol whereas, in this example, the first information exchanged between the secure element SE and the device host are performed by using the NFCE APDU interface.

The use of two different communication links LK2 and LK3 permits to send first information INF1 and second information INF2 in parallel, for example in an interleaved manner, without waiting for example the end of a RF session.

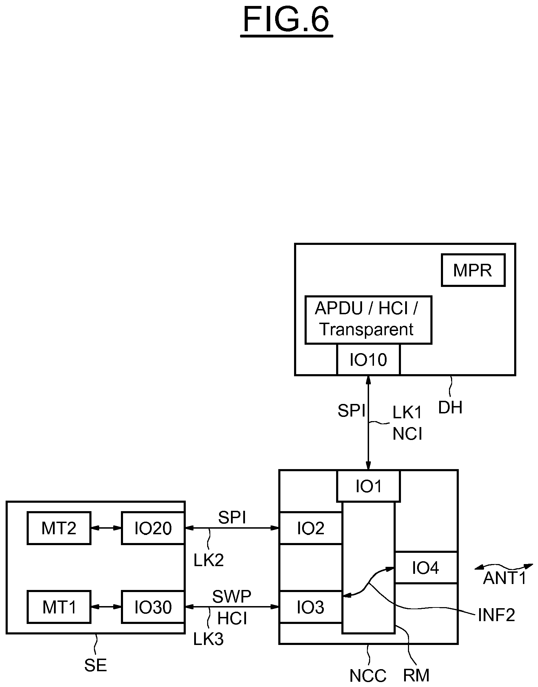

Further, as illustrated in figure 6, this configuration is compatible with a low power mode in which the secure element is powered by the NFC controller NCC which is itself powered by the electromagnetic field received by the antenna ANT1 during a NFC communication with the contactless reader or tag, and not by the battery of the apparatus.

And in such a low power mode, second information INF2 may be still transferred through the NFC controller and the third link LK3.

Although only one secure element SE has been described above, several secure elements (two for example) could be connected to the NFC controller through several second links LK2 and several third links LK3 to input/output means IO2 and IO3 respectively by using for example multiplexers within said input/output means IO2 and IO3.

And during the discovery procedure, an Id for each protocol supported by each secure element will be provided to the device host.

And during information exchange the routing means RM of the NFC controller will route the information accordingly between the corresponding input/output means while controlling the multiplexer(s).

## Claims

1. Method for managing information communication between a NFC controller (NCC), an antenna (ANT1), a device host (DH) and at least one secure element (SE), said NFC controller (NCC) being coupled : i) to said
antenna (ANT1) for a contactless communication with an object (RDR), ii) to said device host (DH) and iii) to said at least one secure element (SE), said method comprising routing all said information through said NFC controller, communicating first information (INF1) to be communicated between said at least one secure element and said device host through a first communication link (LK1) between said NFC controller (NCC) and said device host (DH) and through a second communication link (LK2) between said NFC controller (NCC) and said at least one secure element (SE), **characterized in that** said method further comprises communicating second information (INF2) coming from and/or intended for said antenna through a third communication link (LK3) between said NFC controller (NCC) and said at least one secure element (SE), said first (LK1) and second (LK2) communication links having bandwidths greater than the bandwidth of said third communication link (LK3).

2. Method according to claim 1, wherein the third communication link (LK3) is a SWP link.

3. Method according to any one of the preceding claims, wherein said second communication link (LK2) is a bus of the SPI or I²C or UART or USB type.

4. Method according to any one of the preceding claims wherein said first communication link (LK1) is a bus of the SPI or I²C or UART type and said first information (INF1) are exchanged on said first communication link by using a NCI type communication protocol.

5. Method according to claim 4, wherein said first information (INF1) comprises information exchanged by using APDU NFCEE protocol of said NCI type communication protocol.

6. Method according to claim 4, wherein said first information (INF1) comprises information exchanged by using transparent NFCEE protocol of said NCI type communication protocol.

7. Method according to any one of the preceding claims, further comprising communicating on said first and third communication links (LK1, LK3) third information (INF3) to be communicated between said at least one secure element and said device host.

8. Method according to claims 2, 4 and 7, wherein said third information (INF3) comprises information communicated by using HCI access protocol of said NCI type communication protocol.

9. Apparatus comprising an antenna (ANT1) for a contactless communication with an object, a device host (DH), at least one secure element (SE) and a NFC controller (NCC), said NFC controller including: i) first input/output means (IO1) coupled to said device host through a first communication link (LK1) configured to carry first information (INF1) intended to be communicated between said at least one secure element and said device host, ii) second input/output means (IO2) coupled to said at least one secure element through a second communication link (LK2) configured to carry said first information, iii) third input/output means (IO3) coupled to said at least one secure element through a third communication link (LK3) configured to carry second information (INF2) coming from and/or intended for said antenna, and iv) fourth input/output means (IO4) coupled to said antenna, wherein said first and second communication links (LK1, LK2) have bandwidths greater than the bandwidth of said third communication link (LK3), and said NFC controller further includes routing means (RM) configured to route said first information (INF1) between said first (IO1) and second (IO2) input/output means and to route said second information (INF2) between said third (IO3) and fourth input/output means (IO4).

10. Apparatus according to claim 9, wherein the third communication link (LK3) is a SWP link and third input/output means (IO3) comprises an interface of the HCI type.

11. Apparatus according to claim 9 or 10, wherein said second communication link (LK2) is a bus of the SPI or I²C or UART or USB type and said second input/output means (IO2) comprises a bus interface adapted to the type of said bus.

12. Apparatus according to any one of claims 9 to 11, wherein said first communication link (LK1) is a bus of the SPI or I²C or UART type configured to support a NCI type communication protocol and said first input/output means (IO1) comprises a bus interface adapted to the type of said bus.

13. Apparatus according to claim 12, wherein said first information (INF1) comprise information communicated using APDU NFCEE protocol of said NCI type communication protocol.

14. Apparatus according to claim 12, wherein said first information (INF1) comprise information communicated using transparent NFCEE protocol of said NCI type communication protocol.

15. Apparatus according to any one of claims 9 to 14, wherein said first and third communication links (LK1, LK3) are further configured to carry third information (INF3) intended to be communicated between said at least one secure element and said device host and said routing means are further configured to route said third information between said first and third input/output means.

16. Apparatus according to claims 10, 12 and 15, wherein said third information (INF3) comprises information communicated using HCI access protocol of said NCI type communication protocol.

17. Apparatus according to any one of claims 9 to 16, wherein said at least one secure element (SE) is an UICC or an embedded secure element.

18. Apparatus according to any one of claims 9 to 17, forming a mobile phone (WP).

19. NFC controller comprising first input/output means (IO1) configured to be coupled to a device host (DH) for receiving and/or transmitting first information (INF1) intended to be communicated between at least one secure element (SE) and said
device host, second input/output means (IO2) configured to be coupled to said at least one secure element for receiving and/or transmitting said first information, third input/output means (IO3) configured to be coupled to said at least one secure element for receiving and/or transmitting second information (INF2) coming from and/or intended for an antenna (ANT1) adapted for a contactless communication with an object (RDR), fourth input/output means (IO4) configured to be coupled to said antenna, wherein said first and second input/output means have bandwidths greater than the bandwidth of said third input/output means, and said NFC controller further includes routing means (RM) configured to route said first information between said first and second input/output means and to route said second information between said third and fourth input/output means.

20. NFC controller according to claim 19, wherein said third input/output means (IO3) comprises an interface of the HCI type.

21. NFC controller according to claim 19 or 20, wherein said second input/output means (IO2) comprises a bus interface of the SPI or I²C or UART or USB type.

22. NFC controller according to any one of claims 19 to 21, wherein said first input/output means (IO1) comprises a bus interface of the SPI or I²C or UART type configured to support a NCI type communication protocol.

23. NFC controller according to claim 22, wherein said first information (INF1) comprises information communicated using APDU NFCEE protocol of said NCI type communication protocol.

24. NFC controller according to claim 22, wherein said first information (INF1) comprises information communicated using transparent NFCEE protocol of said NCI type communication protocol.

25. NFC controller according to any one of claims 19 to 24, wherein said first and third input/output means (IO1, IO3) are further configured to receive and/or transmit third information intended to be communicated between said at least one secure element and said device host and said routing means (RM) are further configured to route said third information between said first and third input/output means.

26. NFC controller according to claims 20, 22 and 25, wherein said third information (INF3) comprises information communicated using HCI access protocol of said NCI type communication protocol.

## Patentansprüche

1. Verfahren zum Managen der Datenkommunikation zwischen einer NFC-Steuereinheit (NCC), einer Antenne (ANT1), einem Vorrichtungs-Host (DH) und mindestens einem sicheren Element (SE), wobei die NFC-Steuereinheit (NCC) mit i) der Antenne (ANT1) für eine berührungslose Kommunikation mit einem Objekt (RDR), ii) dem Vorrichtungs-Host (DH) und iii) dem mindestens einen sicheren Element (SE) gekoppelt ist, wobei das Verfahren das Leiten aller Daten durch die NFC-Steuereinheit umfasst, wobei erste Daten (INF1), die zwischen mindestens einem sicheren Element und dem Vorrichtungs-Host über eine erste Kommunikationsverbindung (LK1) zwischen der NFC-Steuereinheit (NCC) und dem Vorrichtungs-Host (DH) und über eine zweite Kommunikationsverbindung (LK2) zwischen der NFC-Steuereinheit (NCC) und dem mindestens einen sicheren Element (SE) kommuniziert werden sollen, **dadurch gekennzeichnet, dass** das Verfahren ferner das Kommunizieren zweiter Daten (INF2), die von der Antenne kommen und/oder für die Antenne bestimmt sind, über eine dritte Kommunikationsverbindung (LK3) zwischen der NFC-Steuereinheit (NCC) und dem mindestens einen sicheren Element (SE) umfasst, wobei die erste (LK1) und die zweite (LK2) Kommunikationsverbindung Bandbreiten besitzen, die größer als die Bandbreite der dritten Kommunikationsverbindung (LK3) sind.

2. Verfahren nach Anspruch 1, wobei die dritte Kommunikationsverbindung (LK3) eine SWP-Verbindung ist.

3. Verfahren nach einem der vorhergehenden Ansprüche, wobei die zweite Kommunikationsverbindung (LK2) ein Bus vom SPI-, I²C-, UART- oder USB-Typ ist.

4. Verfahren nach einem der vorhergehenden Ansprüche, wobei die erste Kommunikationsverbindung (LK1) ein Bus vom SPI-, I²C- oder UART-Typ ist und die ersten Daten (INF1) auf der ersten Kommunikationsverbindung unter Verwendung eines Kommunikationsprotokolls vom NCI-Typ ausgetauscht werden.

5. Verfahren nach Anspruch 4, wobei die ersten Daten (INF1) Daten umfassen, die unter Verwendung des APDU-NFCEE-Protokolls des Kommunikationsprotokolls vom NCI-Typ ausgetauscht werden.

6. Verfahren nach Anspruch 4, wobei die ersten Daten (INF1) Daten umfassen, die unter Verwendung des transparenten NFCEE-Protokolls des Kommunikationsprotokolls vom NCI-Typ ausgetauscht werden.

7. Verfahren nach einem der vorhergehenden Ansprüche, das ferner das Kommunizieren von dritten Daten (INF3), die zwischen dem mindestens einen sicheren Element und dem Vorrichtungs-Host kommuniziert werden sollen, auf der ersten und der dritten Kommunikationsverbindung (LK1, LK3) umfasst.

8. Verfahren nach den Ansprüchen 2, 4 und 7, wobei die dritten Daten (INF3) Daten, die unter Verwendung des HCI-Zugangsprotokolls des Kommunikationsprotokolls vom NCI-Typ kommuniziert werden, umfassen.

9. Vorrichtung, die eine Antenne (ANT1) für eine berührungslose Kommunikation mit einem Objekt, einen Vorrichtungs-Host (DH), mindestens ein sicheres Element (SE) und eine NFC-Steuereinheit (NCC) umfasst, wobei die NFC-Steuereinheit (NCC) Folgendes umfasst: i) erste Eingabe-/Ausgabemittel (IO1), die über eine erste Kommunikationsverbindung (LK1), die konfiguriert ist, erste Daten (INF1), die bestimmt sind, zwischen dem mindestens einen sicheren Element und dem Vorrichtungs-Host kommuniziert zu werden, zu tragen, an den Vorrichtungs-Host gekoppelt sind, ii) zweite Eingabe-/Ausgabemittel (IO2), die über eine zweite Kommunikationsverbindung (LK2), die konfiguriert ist, die ersten Daten zu tragen, an das mindestens eine sichere Element gekoppelt sind, iii) dritte Eingabe-/Ausgabemittel (IO3), die über eine dritte Kommunikationsverbindung (LK3), die konfiguriert ist, zweite Daten (INF2), die von der Antenne kommen und/oder für sie bestimmt sind, zu tragen, an das mindestens eine sichere Element gekoppelt sind, und iv) vierte Eingabe-/Ausgabemittel (IO4), die an die Antenne gekoppelt sind, wobei die erste und die zweite Kommunikationsverbindung (LK1, LK2) Bandbreiten besitzen, die größer als die Bandbreite der dritten Kommunikationsverbindung (LK3) sind, und die NFC-Steuereinheit ferner Routing-Mittel (RM), die konfiguriert sind, die ersten Daten (INF1) zwischen den ersten (IO1) und den zweiten (IO2) Eingabe-/Ausgabemitteln zu leiten und die zweiten Daten (INF2) zwischen den dritten (IO3) und den vierten (IO4) Eingabe-/Ausgabemitteln zu leiten, enthält.

10. Vorrichtung nach Anspruch 9, wobei die dritte Kommunikationsverbindung (LK3) eine SWP-Verbindung ist und die dritten Eingabe-/Ausgabemittel (IO3) eine Schnittstelle vom HCI-Typ umfassen.

11. Vorrichtung nach Anspruch 9 oder 10, wobei die zweite Kommunikationsverbindung (LK2) ein Bus vom SPI-, I²C-, UART- oder USB-Typ ist und die zweiten Eingabe-/Ausgabemittel (IO2) eine an den Typ des Busses angepasste Busschnittstelle umfassen.

12. Vorrichtung nach einem der Ansprüche 9 bis 11, wobei die erste Kommunikationsverbindung (LK1) ein Bus vom SPI-oder I²C- oder UART-Typ ist, der konfiguriert ist, ein Kommunikationsprotokoll vom NCI-Typ zu unterstützen, und die ersten Eingabe-/Ausgabemittel (IO1) eine an den Typ des Busses angepasste Busschnittstelle umfassen.

13. Vorrichtung nach Anspruch 12, wobei die ersten Daten (INF1) Daten umfassen, die unter Verwendung des APDU-NFCEE-Protokolls des Kommunikationsprotokolls vom NCI-Typ ausgetauscht werden.

14. Vorrichtung nach Anspruch 12, wobei die ersten Daten (INF1) Daten umfassen, die unter Verwendung des transparenten NFCEE-Protokolls des Kommunikationsprotokolls vom NCI-Typ kommuniziert werden.

15. Vorrichtung nach einem der Ansprüche 9 bis 14, wobei die ersten und dritten Kommunikationsverbindungen (LK1, LK3) ferner konfiguriert sind, dritte Daten (INF3), die zwischen dem mindestens einen sicheren Element und dem Vorrichtungs-Host kommuniziert werden sollen, zu tragen, und die Routing-Mittel ferner konfiguriert sind, die dritten Daten zwischen den ersten und den dritten Eingabe-/Ausgabemitteln zu leiten.

16. Vorrichtung nach den Ansprüchen 10, 12 und 15, wobei die dritten Daten (INF3) Daten, die unter Verwendung des HCI-Zugangsprotokolls des Kommunikationsprotokolls vom NCI-Typ kommuniziert werden, umfassen.

17. Vorrichtung nach einem der Ansprüche 9 bis 16, wobei das mindestens eine sichere Element (SE) ein UICC oder ein integriertes sicheres Element ist.

18. Vorrichtung nach einem der Ansprüche 9 bis 17, die ein Mobiltelefon (WP) bildet.

19. NFC-Steuereinheit, die Folgendes umfasst: erste Eingabe-/Ausgabemittel (IO1), die konfiguriert sind, an einen Vorrichtungs-Host (DH) zum Empfangen und/oder Senden erster Daten (INF1), die bestimmt sind, zwischen mindestens einem sicheren Element (SE) und dem Vorrichtungs-Host kommuniziert zu werden, gekoppelt zu werden, zweite Eingabe-/Ausgabemittel (IO2), die konfiguriert sind, zum Empfangen und/oder Senden der ersten Daten an das mindestens eine sichere Element gekoppelt zu werden, dritte Eingabe-/Ausgabemittel (IO3), die konfiguriert sind, zum Empfangen und/oder Senden zweiter Daten (INF2), die von der Antenne (ANT1), die für eine berührungslose Kommunikation mit einem Objekt (RDR) ausgelegt ist, kommen und/oder für sie bestimmt sind, an das mindestens eine sichere Element gekoppelt zu werden, und vierte Eingabe-/Ausgabemittel (IO4), die konfiguriert sind, an die Antenne gekoppelt zu werden, wobei die ersten und die zweiten Eingabe-/Ausgabemittel Bandbreiten besitzen, die größer als die Bandbreite der dritten Eingabe-/Ausgabemittel sind, und die NFC-Steuereinheit ferner Routing-Mittel (RM), die konfiguriert sind, die ersten Daten zwischen den ersten und den zweiten Eingabe-/Ausgabemitteln zu leiten und die zweiten Daten zwischen den dritten und den vierten Eingabe-/Ausgabemitteln zu leiten, enthält.

20. NFC-Steuereinheit nach Anspruch 19, wobei die dritten Eingabe-/Ausgabemittel (IO3) eine Schnittstelle vom HCI-Typ umfassen.

21. NFC-Steuereinheit nach einem der Ansprüche 19 oder 20, wobei die zweiten Eingabe-/Ausgabemittel (IO2) eine Busschnittstelle vom SPI-, I²C-, UART- oder USB-Typ umfassen.

22. NFC-Steuereinheit nach einem der Ansprüche 19 bis 21, wobei die ersten Eingabe-/Ausgabemittel (IO1) eine Busschnittstelle vom SPI-, I²C- oder UART-Typ, die konfiguriert ist, ein Kommunikationsprotokolls vom NCI-Typ zu unterstützen, umfassen.

23. NFC-Steuereinheit nach Anspruch 22, wobei die ersten Daten (INF1) Daten umfassen, die unter Verwendung des APDU-NFCEE-Protokolls des Kommunikationsprotokolls vom NCI-Typ kommuniziert werden.

24. NFC-Steuereinheit nach Anspruch 22, wobei die ersten Daten (INF1) Daten umfassen, die unter Verwendung des transparenten NFCEE-Protokolls des Kommunikationsprotokolls vom NCI-Typ kommuniziert werden.

25. NFC-Steuereinheit nach einem der Ansprüche 19 bis 24, wobei die ersten und die dritten Eingabe-/Ausgabemittel (IO1, IO3) ferner konfiguriert sind, dritte Daten, die zwischen dem mindestens einen sicheren Element und dem Vorrichtungs-Host kommuniziert werden sollen, zu empfangen und/oder zu senden, und die Routing-Mittel (RM) ferner konfiguriert sind, die dritten Daten zwischen den ersten und den dritten Eingabe-/Ausgabemitteln zu leiten.

26. NFC-Steuereinheit nach den Ansprüchen 20, 22 und 25, wobei die dritten Daten (INF3) Daten, die unter Verwendung des HCI-Zugangsprotokolls des Kommunikationsprotokolls vom NCI-Typ kommuniziert werden, umfassen.

## Revendications

1. Procédé de gestion de la communication d'informations entre un contrôleur NFC (NCC), une antenne (ANT1), un dispositif hôte (DH) et au moins un élément sécurisé (SE), ledit contrôleur NFC étant couplé : i) à ladite antenne pour une communication sans contact avec un objet (RDR), ii) audit dispositif hôte (DH) et iii) audit au moins un élément sécurisé (SE), ladite méthode comprenant un routage de toutes lesdites informations à travers ledit contrôleur NFC, une communication de premières informations (INF1) à communiquer entre ledit au moins un élément sécurisé et ledit dispositif hôte via un premier lien de communication (LK1) entre ledit contrôleur NFC (NCC) et ledit dispositif hôte (DH) et via un deuxième lien de communication (LK2) entre ledit contrôleur NFC (NCC) et ledit au moins un élément sécurisé (SE), **caractérisé en ce que** ladite méthode comprend en outre une communication de deuxièmes informations (INF2) provenant de et/ou à destination de ladite antenne via un troisième lien de communication (LK3) entre ledit contrôleur NFC (NCC) et ledit au moins un élément sécurisé (SE), ledit premier lien de communication (LK1) et ledit deuxième lien de communication (LK2) ayant des bandes passantes plus grandes que la bande passante dudit troisième lien de communication (LK3).

2. Procédé selon la revendication 1, dans lequel le troisième lien de communication (LK3) est un lien SWP.

3. Procédé selon l'une quelconque des revendications précédentes, dans lequel ledit deuxième lien de communication (LK2) est un bus du type SPI ou I²C ou UART ou USB.

4. Procédé selon l'une quelconque des revendications précédentes, dans lequel ledit premier lien de communication (LK1) est un bus du type SPI ou I²C ou UART et dans lequel lesdites premières informations (INF1) sont échangées sur ledit premier lien de communication en utilisant un protocole de communication du type NCI.

5. Procédé selon la revendication 4, dans lequel lesdites premières informations (INF1) comprennent des informations échangées en utilisant le protocole APDU NFCEE dudit protocole de communication du type NCI.

6. Procédé selon la revendication 4, dans lequel lesdites premières informations (INF1) comprennent des informations échangées en utilisant un protocole NFCEE transparent dudit protocole de communication du type NCI.

7. Procédé selon l'une quelconque des revendications précédentes, comprenant en outre une communication sur lesdits premier et troisième liens de communication (LK1, LK3) de troisièmes informations (INF3) à communiquer entre ledit au moins un élément sécurisé et ledit dispositif hôte.

8. Procédé selon les revendications 2, 4 et 7, dans lequel lesdites troisièmes informations (INF3) comprennent des informations communiquées en utilisant un protocole d'accès HCI dudit protocole de communication du type NCI.

9. Appareil comprenant une antenne (ANT1) permettant une communication sans contact avec un objet, un dispositif hôte (DH), au moins un élément sécurisé (SE) et un contrôleur NFC (NCC), ledit contrôleur NFC incluant : i) un premier moyen d'entrée/sortie (IO1) couplé audit dispositif hôte via un premier lien de communication (LK1) configuré pour véhiculer des premières informations (INF1) destinées à être communiquées entre ledit au moins un élément sécurisé et ledit dispositif hôte, ii) un deuxième moyen d'entrée/sortie (IO2) couplé audit au moins un élément sécurisé via un deuxième lien de communication (LK2) configurée pour véhiculer lesdites premières informations, iii) un troisième moyen d'entrée/sortie (IO3) couplé audit au moins un élément sécurisé via un troisième lien de communication (LK3) configuré pour véhiculer des deuxièmes informations (INF2) provenant de et/ou à destination de ladite antenne, et iv) un quatrième moyen d'entrée/sortie (IO4) couplé à ladite antenne, dans lequel lesdits premier et deuxième liens de communication (LK1, LK2) ont des bandes passantes plus grandes que la bande passante dudit troisième lien de communication (LK3), et ledit contrôleur NFC inclut en outre un moyen de routage (RM) configuré pour router lesdites premières informations (INF1) entre lesdits premier moyen d'entrée/sortie (IO1) et deuxième moyen d'entrée/sortie (IO2) et pour router lesdites deuxièmes informations (INF2) entre lesdits troisième moyen d'entrée/sortie (IO3) et quatrième moyen d'entrée/sortie (IO4).

10. Appareil selon la revendication 9, dans lequel le troisième lien de communication (LK3) est un lien SWP et le troisième moyen d'entrée/sortie (IO3) comprend une interface du type HCI.

11. Appareil selon la revendication 9 ou 10, dans lequel ledit deuxième lien de communication (LK2) est un bus du type SPI ou I²C ou UART ou USB et ledit deuxième moyen d'entrée/sortie (IO2) comprend une interface de bus adaptée au type dudit bus.

12. Appareil selon l'une quelconque des revendications 9 à 11, dans lequel ledit premier lien de communication (LK1) est un bus du type SPI ou I²C ou UART configuré pour supporter un protocole de communication du type NCI et ledit premier moyen d'entrée/sortie (IO1) comprend une interface de bus adaptée au type dudit bus.

13. Appareil selon la revendication 12, dans lequel lesdites premières informations (INF1) comprennent des informations communiquées en utilisant le protocole APDU NFCEE dudit protocole de communication du type NCI.

14. Appareil selon la revendication 12, dans lequel lesdites premières informations (INF1) comprennent des informations communiquées en utilisant le protocole NFCEE transparent dudit protocole de communication du type NCI.

15. Appareil selon l'une quelconque des revendications 9 à 14, dans lequel lesdits premier et troisième liens de communication (LK1, LK3) sont en outre configurés pour véhiculer des troisièmes informations (INF3) destinées à être communiquées entre ledit au moins un élément sécurisé et ledit dispositif hôte et ledit moyen de routage est en outre configuré pour router lesdites troisièmes informations entre ledit premier moyen d'entrée/sortie et ledit troisième moyen d'entrée/sortie.

16. Appareil selon les revendications 10, 12 et 15, dans lequel lesdites troisièmes informations (INF3) comprennent des informations communiquées en utilisant un protocole d'accès HCI dudit protocole de communication du type NCI.

17. Appareil selon l'une quelconque des revendications 9 à 16, dans lequel ledit au moins un élément sécurisé (SE) est une UICC ou un élément sécurisé incorporé.

18. Appareil selon l'une quelconque des revendications 9 à 17, formant un téléphone portable (WP).

19. Contrôleur NFC comprenant un premier moyen d'entrée/sortie (IO1) configuré pour être couplé à un dispositif hôte (DH) pour recevoir et/ou transmettre des premières informations (INF1) destinées à être communiquées entre au moins un élément sécurisé (SE) et ledit dispositif hôte, un deuxième moyen d'entrée/sortie (IO2) configuré pour être couplé audit au moins un élément sécurisé pour recevoir et/ou transmettre lesdites premières informations, un troisième moyen d'entrée/sortie (IO3) configuré pour être couplé audit au moins un élément sécurisé pour recevoir et/ou transmettre des deuxièmes informations (INF2) provenant de et/ou à destination d'une antenne (ANT1) adaptée pour une communication sans contact avec un objet (RDR), un quatrième moyen d'entrée/sortie (IO4) configuré pour être couplé à ladite antenne, dans lequel lesdits premier et deuxième moyens d'entrée/sortie ont des bandes passantes plus grandes que la bande passante dudit troisième moyen d'entrée/sortie, et ledit contrôleur NFC inclut en outre un moyen de routage (RM) configuré pour router lesdites premières informations entre lesdits premier et deuxième moyens d'entrée/sortie et pour router lesdites deuxièmes informations entre lesdits troisième et quatrième moyens d'entrée/sortie.

20. Contrôleur NFC selon la revendication 19, dans lequel ledit troisième moyen d'entrée/sortie (IO3) comprend une interface du type HCI.

21. Contrôleur NFC selon la revendication 19 ou 20, dans lequel ledit deuxième moyen d'entrée/sortie (IO2) comprend une interface de bus du type SPI ou I²C ou UART ou USB.

22. Contrôleur NFC selon l'une quelconque des revendications 19 à 21, dans lequel ledit premier moyen d'entrée/sortie (IO1) comprend une interface de bus du type SPI ou I²C ou UART configurée pour supporter un protocole de communication du type NCI.

23. Contrôleur NFC selon la revendication 22, dans lequel lesdites premières informations (INF1) comprennent des informations communiquées en utilisant le protocole APDU NFCEE dudit protocole de communication du type NCI.

24. Contrôleur NFC selon la revendication 22, dans lequel lesdites premières informations (INF1) comprennent des informations communiquées en utilisant un protocole NFCEE transparent dudit protocole de communication du type NCI.

25. Contrôleur NFC selon l'une quelconque des revendications 19 à 24, dans lequel lesdits premier et troisième moyens d'entrée/sortie (IO1, IO3) sont configurés en outre pour recevoir et/ou transmettre des troisièmes informations destinées à être communiquées entre ledit au moins un élément sécurisé et ledit dispositif hôte et ledit moyen de routage (RM) est en outre configuré pour router lesdites troisièmes informations entre lesdits premier et troisième moyens d'entrée/sortie.

26. Contrôleur NFC selon les revendications 20, 22 et 25, dans lequel lesdites troisièmes informations (INF3) comprennent des informations communiquées en utilisant un protocole d'accès HCI dudit protocole de communication du type NCI.
